# EUROPÄISCHE PATENTSCHRIFT

(11) **EP 2 715 174 B1**
(45) Veröffentlichungstag und Bekanntmachung des Hinweises auf die Patenterteilung: **09.11.2016**
(21) Anmeldenummer: 12740872.2
(22) Anmeldetag: 25.05.2012
(51) Int. Cl.: F16D 23/02

(54) **VERFAHREN ZUR HERSTELLUNG EINES BAUTEILES MIT EINEM REIBBELAG**
METHOD FOR PRODUCING A COMPONENT HAVING A FRICTION LINING
PROCÉDÉ DE FABRICATION D'UNE PIÈCE POURVUE D'UNE COUCHE DE FRICTION

(30) Priorität: 27.05.2011 DE 102011103344
(43) Veröffentlichungstag der Anmeldung: 09.04.2014
(73) Patentinhaber: PMG Füssen GmbH, 87629 Füssen (DE)
(72) Erfinder: DREßEN, Thomas, 87629 Füssen (DE); JACHTNER, Timo, 87637 Eisenberg (DE); RAMBALDINI, Pascal, 87634 Obergünzburg (DE); RAU, Günter, 87629 Füssen (DE); WEIRATHER, Jürgen, A-6600 Reutte (AT)
(86) Internationale Anmeldenummer: PCT/DE2012/000546
(87) Internationale Veröffentlichungsnummer: WO 2012/163324

(56) Entgegenhaltungen:
- EP-A1- 0 266 712
- EP-A1- 1 429 044
- WO-A1-99/35415
- DE-T2- 69 612 059
- US-A1- 2006 236 523

## Beschreibung

Die Erfindung betrifft ein Verfahren zur Herstellung eines ringartigen Bauteiles mit den Merkmalen des Oberbegriffes des Patentanspruches 1.

Aus EP 1 577 576 B1 ist ein Zwischenring als Bauteil für ein Mehrfachkonussynchronsystem bekannt. Mehrere Umfangskanten des Zwischenringes begrenzen in Axialrichtung dessen Manteloberfläche. An eine Manteloberfläche dieses Zwischenringes wird ein Reibbelag aufgeklebt. Aus DE 696 12 059 T2 ist ein weiteres Reibelement bekannt. Es wird an der inneren Umfangsfläche eines Synchronringes fixiert. Die Relativanordnung des Reibbelages an dem ringartigen Bauteil und die geometrischen Abmessungen des Reibbelages sind für die Funktionalität des Bauteiles von Bedeutung, z.B. in einem Getriebe eines Kraftfahrzeuges.

Eine wesentliche Anforderung an ringartige Bauteile (wie z.B. Zwischenringe, Synchronringe und weitere Bauteile eines Synchronsystems) ist es, dass sie vordefinierte geometrische Abmessungen bei der Fertigung einhalten. So kann an dem Ringkörper eines Synchronringes oder an dessen Reibbelag ein Material abtragender Bearbeitungsschritt durchgeführt werden, um einen Exzentrizitätsausgleich zwischen der Mantelfläche des Reibbelages und einer weiteren Mantelfläche des Synchronringes zu erzielen. In diesem Sinne ist es aus DE 10 2006 061 415 A1 bekannt, Synchronringe für eine Synchronisiereinrichtung eines Kraftfahrzeuggetriebes umformtechnisch aus Blech spanlos herzustellen und nachträglich spanend zu bearbeiten, um den erforderlichen Genauigkeiten zu genügen. Wird ein Reibbelag auf eine Mantelfläche des Ringkörpers dieses Synchronringes aufgeklebt, so übertragen sich eventuelle Ungenauigkeiten des Ringkörpers auf den Reibbelag, was wiederum eine Nachbearbeitung des Reibbelages erfordert.

EP 0 266 712 A1 ist ein Synchronring mit einem ringartigen Metallkörper und einem Reibkörper entnehmbar. Der Reibkörper wird an den Metallkörper angeschweißt.

Aus US 2006/0236523 A1 und WO 99/35415 A1 sind weitere metallische Ringkörper bekannt, an denen ein Reibbelag mittels einer Klebschicht gehalten wird,

EP 1429 044 A1 offenbart einen Synchronring, dessen Ringkörper eine Lagerfläche zur Auflage eines organischen Belages aufweist. Der Ringkörper ist als Messingteil mittels Schmieden oder als Stahltell mittels Blechtlefziehen hergestellt. Alternativ kann der Ringkörper ein gesintertes Metalltell sein. Vor dem Auflegen des Belages auf die Lagerfläche des Ringkörpers findet keine spanende Bearbeitung der Lagerfläche statt

Der Erfindung liegt die Aufgabe zugrunde, ein gattungsgemäßes ringartiges Bauteil fertigungstechnisch einfach bereitzustellen.

Diese Aufgabe wird durch die Merkmalskombination des unabhängigen Patentanspruches 1 gelöst.

Erfindungsgemäß wird der Reibbelag an einer Mantelfläche des Ringkörpers fixiert, wobei von dem Reibbelag abzudeckende Flächenbereiche dieser Mantelfläche nach der Herstellung des Ringkörpers selbst und vor der Fixierung des Reibbelages mechanisch unbearbeitet bleiben. Diese Nachbearbeitung wird in Umfangsrichtung des Ringkörpers zumindest teilweise bzw. zumindest abschnittsweise vermieden. Insbesondere bleiben in Umfangsrichtung sämtliche von dem Reibbelag abzudeckenden Flächenbereiche der Mantelfläche mechanisch unbearbeitet. Eine mechanische Nachbearbeitung, d.h. ein Material abtragender nachträglicher Bearbeitungsschritt nach dem Fertigen des Ringkörpers selbst ist überflüssig. Geometrisch erforderliche Endmaße und Toleranzen werden trotz des Verzichts auf eine Material abtragende Nachbearbeitung des Ringkörpers erforderlichenfalls eingehalten, indem der Reibbelag erforderlichenfalls verdichtet wird. Hierzu wird ein Reibbelag verwendet, der hinsichtlich seines Dicken-Maßes veränderbar ist (z.B. mittels einer angreifenden Druck- oder Presskraft). Der Reibbelag kann verdichtet bereitgestellt werden. Alternativ oder zusätzlich kann der Reibbelag während bzw. nach seiner Fixierung an der ausgewählten Mantelfläche verdichtet werden. Da der vorgenannte herkömmliche mechanische Bearbeitungsschritt eingespart wird, kann das Bauteil kostengünstig hergestellt werden.

Die axiale Breite b ist durch zwei mit Abstand, insbesondere Parallelabstand, zueinander verlaufende Umfangskanten des Ringkörpers definiert und begrenzt auf diese Weise in Axialrichtung einen Abschnitt, innerhalb dessen sich zumindest teilweise eine (radial innere oder äußere) Mantelfläche des Ringkörpers mit dem daran fixierten Reibbelag erstreckt.

Der Ringkörper ist pulvermetallurgisch, d.h. als gesintertes Bauteil hergestellt.

Eine pulvermetallurgische Herstellung des Ringkörpers ohne Material abtragende nachträgliche Bearbeitung einer von dem Reibbelag abzudeckenden Mantelfläche hat den zusätzlichen Vorteil, dass die Sinterporen an der jeweiligen Manteloberfläche offenporig erhalten bleiben und hierdurch eine bessere Haftung bzw. Fixierung des Reibbelages an der ausgewählten Mantelfläche ermöglichen. Im Falle einer Fixierung des Reibbelages mittels Kleben.

Der Ringkörper weist vorzugsweise eine Mantelfläche oder zwei radial gegenüberliegende Mantelflächen auf. An mindestens einer Mantelfläche des Ringkörpers ist die Fixierung eines Reibbelages vorgesehen. Für bestimmte Anwendungen tragen vorzugsweise beide gegenüberliegende Mantelflächen des Ringkörpers jeweils einen Reibbelag. Sämtliche Mantelflächen des Ringkörpers' können konisch oder zylindrisch ausgebildet sein. Eine radial innere und eine radial äußere Mantelfläche desselben Ringkörpers können alternativ unterschiedlich ausgebildet sein, beispielsweise ist eine Mantelfläche zylindrisch und die radial gegenüberliegende Mantelfläche konisch ausgebildet. Die vorgenannten unterschiedlichen Ausführungen des Ringkörpers bzw. des herzustellenden ringartigen Bauteiles finden vorteilhaft Anwendung für die Herstellung von Synchronisierbauteilen für Kraftfahrzeug-Getriebe, z.B. Kupplungskörper, Synchronringe, Zwischenringe, Innenringe und andere ringartige Bauteile.

Wie bereits erwähnt, wird die herkömmliche mechanische Bearbeitung der Mantelfläche des Ringkörpers des Bauteiles vorteilhaft durch eine Verdichtung des fixierten Reibbelages ersetzt. Vorzugsweise erfolgt die Verdichtung während und/oder nach der Fixierung des Reibbelages. Diese Verdichtung schafft in einer Doppelfunktion sowohl die gewünschten geometrischen Endmaße des Bauteiles (z.B. Form-, Lage-, Winkeltoleranz, Position und Dicke des Reibbelages sowie Maßhaltigkeit, Rundlauf des Bauteiles) entsprechend der vordefinierten Toleranzen als auch eine Endstruktur des Reibbelages (z.B. Topographie, Porosität, Verschleißfestigkeit, Kompressibilität).

Vorteilhaft ist die Verdichtung in Umfangsrichtung der Mantelfläche des Bauteiles unterschiedlich, um die vordefinierten geometrischen Endmaße und Endstruktur des Bauteiles zu erzielen.

Mit einem ein Vlies oder ein Gewebe, insbesondere ein Fasergewebe aufweisenden Reibbelag lässt sich die gewünschte Verdichtung und somit die gewünschte Endstruktur des Bauteiles fertigungstechnisch einfach erzielen. Im Falle eines Faser-Gewebes handelt es sich vorzugsweise um ein Glasfaser-, Karbonfaser- oder Mischfaser-Gewebe.

Bevorzugte radiale Dicken des Reibwerkstoffes des Reibbelages betragen 0,1 mm bis 1,0 mm, insbesondere 0,35 mm bis 0,55 mm.

Vorzugsweise wird der Reibbelag mittels Kleben, insbesondere Heißkleben, an der Mantelfläche des Bauteiles fixiert.

In einer bevorzugten Ausführungsform wird zur Herstellung des Bauteiles bzw. zur Durchführung des Verfahrens ein in Umfangsrichtung segmentierter Spreizstempel als Werkzeug verwendet. Dessen Stempelsegmente sind in Umfangsrichtung des Ringkörpers aneinandergereiht angeordnet und jeweils einzeln radial beweglich zur Spreizung des Spreizstempels radial nach innen und/oder nach außen. Dieses Werkzeug wird axial an das Bauteil herangeführt und axial positioniert. Vorzugsweise ist der Reibbelag bereits an der ausgewählten Mantelfläche des Ringkörpers des Bauteiles vorfixiert. Das axial positionierte Spreizstempel-Werkzeug wird radial verfahren, indem seine Spreizsegmente entweder radial nach innen oder nach außen (je nach zu beaufschlagender Mantelfläche) bewegt werden. Dabei entsteht ein definierter Radialdruck auf den Reibbelag. Der Reibbelag wird deshalb mit einer definierten radialen Druckkraft an der Mantelfläche des Ringkörpers fixiert. Gleichzeitig können unerwünschte axiale Relativbewegungen zwischen dem Reibbelag und der Mantelfläche zuverlässig vermieden werden.

Die Druckbeaufschlagung kann unter Temperatur (z.B. Heißkleben des Reibbelages bei 220°C), definiertem Druck (z.B. 14 N/mm²) und einer definierten Zeitdauer erfolgen.

Im Falle einer Verdichtung des Reibbelages mittels des vorgenannten Werkzeugs sind die in Umfangsrichtung vorhandenen Segmentlücken zunächst nicht verdichtet. Hierzu wird vorteilhaft das Werkzeug in Umfangsrichtung definiert gedreht, um die Bereiche der Segmentlücken zu verdichten.

In einer bevorzugten Ausführungsform wird während der Aktivierung des Spreizstempel-Werkzeugs bzw. wird mittels dieses Werkzeugs eine Positionierung, Verdichtung, Klebung und Aushärtung (z.B. phenolharzgetränktes Karbonfaser-Gewebe) des Reibbelages an der Mantelfläche bewirkt. In einer weiteren bevorzugten Ausführungsform wird das Spreizstempel-Werkzeug dazu verwendet, mittels der radialen Druckbeaufschlagung den Reibbelag an die Mantelfläche des Ringkörpers lediglich leicht anzudrücken (z.B. bei 100°C), um eine Vorfixierung und Positionierung des Reibbelags zu erzielen. Mittels eines weiteren, für höhere Temperaturen geeigneten Spreizstempel-Werkzeugs kann danach z.B. ein Heißkleben, Verdichten und gegebenenfalls Aushärten des Reibbelags erreicht werden.

In einer alternativen Ausführung wird der vorbeschriebene und weiterhin noch zu beschreibende Spreizstempel hinsichtlich Aufbau und Funktion unabhängig von einer Kombination mit einem oder mehreren Merkmalen des Patentanspruches 1 oder davon abhängiger Unteransprüche verwendet. Mit anderen Worten ist in diesem Fall ein in Umfangsrichtung segmentierter Spreizstempel vorgesehen, dessen Stempelsegmente einzeln radial beweglich sind zur Spreizung des Spreizstempels radial nach innen und/oder außen, um einen Reibbelag an einer Mantelfläche eines Ringkörpers zu fixieren unabhängig davon, auf welche Weise der Ringkörper hergestellt und bereitgestellt wird. Der Spreizstempel kann folglich im Zusammenhang mit jedem beliebigen Ringkörper eingesetzt werden, um ein beliebiges ringartiges Bauteil herzustellen. So spielt es bei dieser alternativen Ausführung auch keine Rolle, ob der Ringkörper nach seiner Herstellung mit einer mechanisch unbearbeiteten, den Reibbelag aufnehmenden Mantelfläche bereitgestellt wird oder ob diese Mantelfläche vor der Fixierung des Reibbelages noch mechanisch nachbearbeitet wird. Mit einem derart unabhängig von den Merkmalen des Patentanspruches 1 verwendeten Spreizstempel sind in bevorzugten Ausführungsformen auch einzelne oder mehrere der in den Unteransprüchen beanspruchten, über den Patentanspruch 1 hinausgehende Merkmale kombinierbar.

Mittels des Spreizstempels können unerwünschte axiale Kraftkomponenten eines Werkzeugs und unerwünschte axiale Verschiebungen des Reibbelages an der ausgewählten Mantelfläche des Ringkörpers des Bauteiles vermieden werden. Somit können an einem ringartigen Bauteil vordefinierte enge Form-, Lage- und Winkeltoleranzen zuverlässig eingehalten werden. Der Ausschussanteil bei der Herstellung der Bauteile wird kostensparend reduziert, da die gewünschte Positionierung des Reibbelages innerhalb der Breite b während und nach der Fixierung des Reibbelages erhalten bleibt.

Vorzugsweise wird der Reibbelag mittels des Spreizstempels ausschließlich mittels radialer Druckkraft an der Mantelfläche des Ringkörpers des Bauteiles fixiert.

Vorzugsweise wird zwischen einem ersten Umfangsrand des Reibbelages und einer diesem Umfangsrand axial zugewandten ersten Umfangskante des Ringkörpers ein reibbelagsfreier Axialabstand d1 gebildet. Für diesen Axialabstand d1 gilt, dass der axiale Abstand d1 > 0 mm ist.

Hierdurch können Unregelmäßigkeiten oder Fehlfunktionen beim Zusammenwirken des Bauteiles mit anderen Funktionsteilen (z.B. Synchronring mit einem Gegenkonus bei Getrieben) konstruktiv einfach vermieden werden. Die durch den Axialabstand d1 gebildete reibbelagsfreie Zone der Mantelfläche des Ringkörpers des Bauteiles ermöglicht axiale Relativbewegungen zwischen dem Bauteil und sich mit diesem Bauteil paarenden Teilen im Bereich der reibbelagsfreien Zone, ohne dass Bestandteile des Reibbelages stören. Mechanische Kollisionen mit zusammenwirkenden Bauteilen während des Betriebseinsatzes werden vermieden.

Um den vorgenannten Axialabstand d1 zuverlässig auszubilden, wird zur Fixierung des Reibbelages vorzugsweise ein segmentierter Innen- und/oder Außen-Spreizstempel verwendet, dessen Stempelsegmente radial beweglich sind zur Spreizung des Stempels radial nach innen und/oder außen. Mit anderen Worten weist der Spreizstempel in Umfangsrichtung eine Mehrzahl aneinandergereihter Stempelsegmente auf, die einzeln in Radialrichtung beweglich sind. Hierdurch entstehen die radialen Spreizbewegungen der Stempelsegmente entweder radial nach innen oder radial nach außen. Der Spreizstempel kann derart ausgebildet sein, dass seine Stempelsegmente je nach Anwendungsfall bewegungssteuerbar sind, d.h. radial nach innen und (in einem anderen Anwendungsfall) radial nach außen.

Der vordefinierte Abstand d1 lässt sich fertigungstechnisch besonders einfach realisieren, indem der Reibbelag mittels der Stempelsegmente des Spreizstempels mit einer definierten radialen Druckkraft an der ausgewählten Mantelfläche fixiert wird. Hierzu wird der Spreizstempel in Axialrichtung in die gewünschte Relativposition zum Bauteil herangeführt, um danach mittels seiner in Radialrichtung beweglichen Stempelsegmente eine radiale Druckkraft auf den zu fixierenden Reibbelag auszuüben.

Während der Druckbeaufschlagung kann auch ein Kleben, Verdichten und Aushärten des Reibbelages erfolgen.

Je nach Anwendungsfall des Bauteiles kann der Abstand d1 unterschiedlich dimensioniert werden. Somit kann immer ein Kompromiss zwischen größtmöglicher Belagsfläche des Reibbelages für eine wirksame Kraftübertragung einerseits und zuverlässiger Kontaktvermeidung im axialen Randbereich des Bauteiles mit paarenden Teilen gefunden werden.

Im Sinne eines solchen Kompromisses wird der Abstand d1 bevorzugt definiert als d1 ≥ 0,1 mm. Weiter bevorzugt ist d1 ≥ X, wobei X ausgewählt ist aus der Wertemenge 0,2 mm, 0,3 mm, 0,4 mm, 0,5 mm. Ein Mindestabstand von d1 0,1 mm unterstützt für unterschiedliche Anwendungsfälle eine störungsfreie Paarung des Bauteiles und zugeordneter Teile. Größere Abstände d1 können abhängig von der Dimensionierung des Bauteiles und der paarenden Teile vorteilhaft sein.

Vorzugsweise beträgt die reibbelagsfreie Zone bzw. der Abstand d1 mindestens 10% der axialen Breite b, weiter bevorzugt mindestens 14 % der axialen Breite b und insbesondere mindestens 18 % der axialen Breite b. Derartig definierte reibbelagsfreie Zonen erleichtern das störungsfreie Zusammenwirken des ringartigen Bauteiles mit weiteren Funktionsteilen zusätzlich. Auf konstruktiv aufwändige Maßnahmen an dem Bauteil oder den Funktionsteilen zur Vermeidung eines unerwünschten mechanischen Kontaktes zwischen dem Funktionsteil und dem Reibbelag - insbesondere in einer axialen Randzone der Mantelfläche des Bauteiles - kann kostensparend verzichtet werden.

Vorzugsweise ist eine weitere reibbelagsfreie Zone an der axial gegenüberliegenden Randzone der vom Reibbelag abgedeckten Mantelfläche des Bauteiles vorgesehen. Diese zweite Zone ist durch einen weiteren axialen Abstand d2 repräsentiert, der in Axialrichtung von dem zweiten Umfangsrand des Reibbelages und einer zweiten Umfangskante des Bauteiles begrenzt ist. Dieser weitere axiale Abstand d2 kann je nach Anwendungsfall des ringartigen Bauteiles unterschiedlich groß sein. Vorzugsweise ist der weitere axiale Abstand d2 kleiner als der gegenüberliegende Axialabstand d1.

Die vorgenannten Abstände d1 und d2 sowie die vorgenannten Verhältnisse zwischen Abstand d1 und Breite b sind in Umfangsrichtung des Bauteiles vorzugsweise entlang der gesamten Umfangsrichtung ausgebildet. Hierdurch ist die ordnungsgemäße technische Funktionalität des Bauteiles zusätzlich unterstützt.

Die die axiale Breite begrenzenden Umfangskanten erstrecken sich in Ring-Umfangsrichtung des Ringkörpers. Die Umfangskanten liegen vorzugsweise auf einer den Reibbelag tragenden (radial inneren oder äußeren) Mantelfläche des Ringkörpers. Eine Umfangskante kann auch durch eine Kante an einer der beiden axialen Stirnflächen des Ringkörpers gebildet sein. Diese Kante kann auf der den Reibbelag tragenden Mantelfläche des Ringkörpers des Bauteiles selbst liegen oder in Radialrichtung versetzt angeordnet sein (z.B. aufgrund einer Fase des Ringkörpers in Umfangsrichtung).

Vorzugsweise findet die vorbeschriebene Positionierung des Reibbelages Anwendung auf ringartige Bauteile mit konischem Oberflächenverlauf des Ringkörpers. Der Ringkörper des Bauteiles kann dementsprechend einen Außenkonus (radial äußere Mantelfläche) und/oder einen Innenkonus (radial innere Mantelfläche) aufweisen. Somit kann die Positionierung des Reibbelages vorteilhaft bei konischen Bauteilen wie Synchronringen, Zwischenringen Innenringen oder Kupplungskörpern eines Kfz-Getriebes angewendet werden.

Bei konischen Bauteilen bzw. konisch verlaufenden Mantelflächen des Ringkörpers ist der verwendete Spreizstempel zur Fixierung des Reibbelages vorzugsweise ebenfalls konisch ausgebildet, um definierte radiale Druckkräfte zu erzeugen und unerwünschte axiale Verschiebungen des zu fixierenden bzw. des bereits fixierten Reibbelages zu vermeiden. In einer weiteren Ausführungsform ist der Spreizstempel zylindrisch ausgebildet, insbesondere zur Fixierung eines Reibbelages an einer zylindrischen Mantelfläche des Ringkörpers.

Die vorbeschriebenen Merkmale können vorteilhaft für eine kostengünstige Herstellung von Synchronisierbauteilen für Kfz-Getriebe angewendet werden. Die oben beschriebene, vordefinierte Positionierung des Reibbelages vermeidet funktionale Beeinträchtigungen des Bauteiles im Betriebseinsatz. Der Anteil funktionsuntüchtiger Bauteile kann deshalb kostensparend reduziert werden. Vorzugsweise ist ein Synchronisierbauteil als ein Synchronring, Zwischenring, Innenring oder Kupplungskörper ausgebildet.

Die Erfindung wird anhand der in den Zeichnungen dargestellten Ausführungsbeispiele näher erläutert. Es zeigen:
Fig. 1: eine perspektivische Darstellung eines Synchronringes in einer ersten Ausführungsform,
Fig. 2: eine geschnittene Seitenansicht des Synchronringes gemäß Fig.1,
Fig. 3: eine vergrößerte Darstellung des Details III in Fig. 2,
Fig. 4 eine perspektivische Darstellung eines Synchronringes in einer weiteren Ausführungsform,
Fig. 5 eine geschnittene Seitenansicht des Synchronringes gemäß Fig.4,
Fig. 6: eine vergrößerte Darstellung des Details VI in Fig. 5
Fig. 7: die vergrößerte Detaildarstellung des Ringkörpers gemäß Fig. 3, jedoch ohne fixierten Reibbelag,
Fig. 8: die vergrößerte Detaildarstellung des Ringkörpers gemäß Fig. 6, jedoch ohne fixierten Reibbelag.

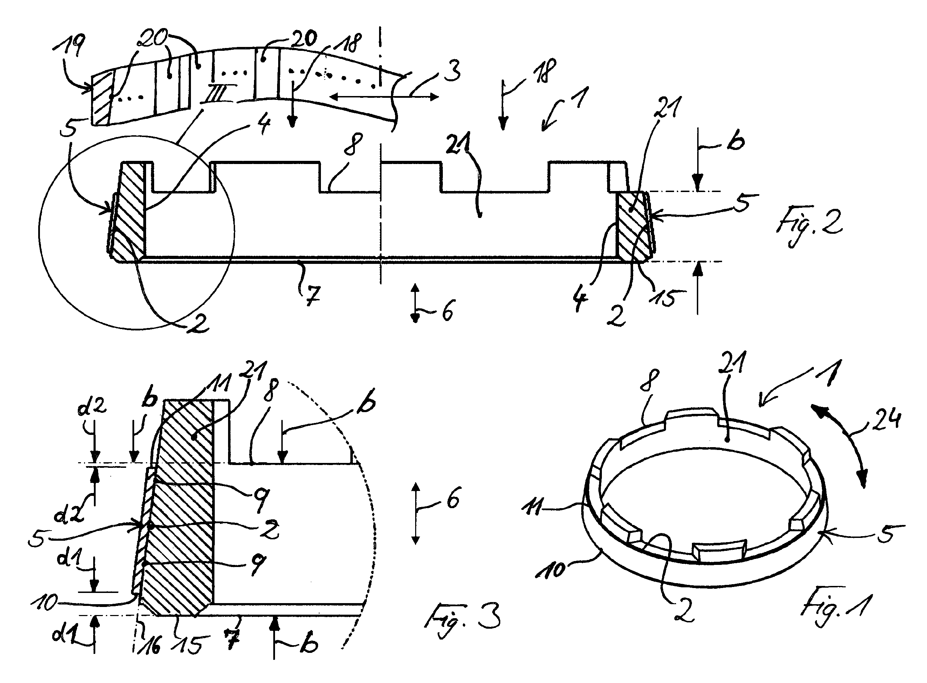

Gemäß Fig. 1 ist das ringartige Bauteil als ein mittels Sintern hergestellter Synchronring 1, nämlich als ein sogenannter Innenring mit einem Außenkonus an einer radial äußeren Mantelfläche 2 seines Ringkörpers 21 ausgebildet. Mit anderen Worten bildet die äußere Mantelfläche 2 einen Außenkonus. In Radialrichtung 3 gegenüberliegend weist der Ringkörper 21 des Synchronringes 1 eine radial innere Mantelfläche 4 auf. Diese Mantelfläche 4 ist im Ausführungsbeispiel nicht mit einem Reibbelag abgedeckt. Während die radial äußere Mantelfläche 2 konisch verläuft, ist die innere Mantelfläche 4 zylindrisch ausgebildet. An der äußeren Mantelfläche 2 ist ein konisch gestalteter Reibring bzw. Reibbelag 5 fixiert. Er deckt einen Teil der äußeren Mantelfläche 2 in Umfangsrichtung 24 des Synchronringes 1 ab.

Zwei in Axialrichtung 6 mit parallelem Abstand zueinander verlaufende Umfangskanten, nämlich eine erste Umfangskante 7 an einer axialen Stirnfläche 15 des Ringkörpers 21 und eine zweite Umfangskante 8, begrenzen eine axiale Breite b, innerhalb der der Reibbelag 5 positioniert ist. Beide Umfangskanten 7, 8 begrenzen entlang einer axialen Breite (b) einen geradlinigen Querschnitt 9 der Mantelfläche 2 und eine gedachte Verlängerung 16 dieses Querschnittes 9 (Fig. 3).

Zwischen einem ersten Umfangsrand 10 des Reibbelages 5 und der diesem Umfangsrand 10 axial zugewandten ersten Umfangskante 7 ist ein axialer Abstand d1 gebildet, der frei von dem Reibbelag 5 ist. Beispielsweise ist der Abstand d1 = 1,15 mm und die axiale Breite b = 8,1 mm. Daraus ergibt sich bei dem Synchronring 1 ein Längenverhältnis d1 / b = 0,14.

Zwischen dem zweiten Umfangsrand 11 des Reibbelages 5 und der zweiten Umfangskante 8 ist ein reibbelagsfreier weiterer axialer Abstand d2 gebildet. Bei einem Synchronring 1 mit den vorgenannten Werten beträgt der weitere axiale Abstand d2 z.B. d2 = 0,2 mm.

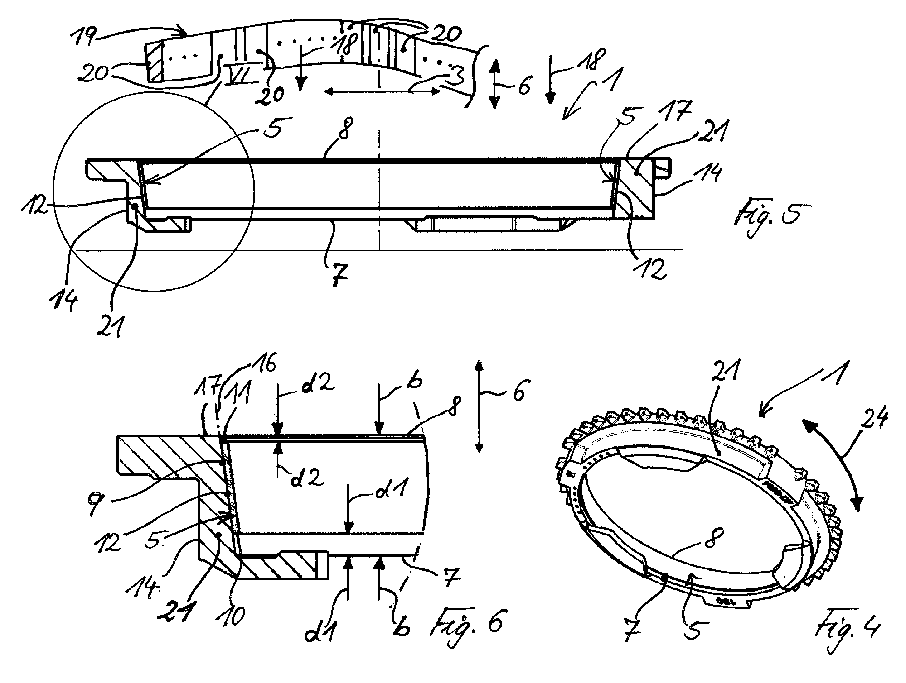

In einer weiteren Ausführungsform gemäß Fig. 4 handelt es sich bei dem Synchronring 1 um einen sogenannten Außenring, dessen Reibbelag 5 an einer konisch ausgestalteten radial inneren Mantelfläche 12 des Ringkörpers 21 fixiert ist. Im übrigen sind bei dieser Ausführungsform Teile des Synchronringes 1 mit gleichen Bezugszeichen wie in der Ausführungsform gemäß Fig. 1 bis Fig. 3 versehen, soweit es sich um gleichartige Funktionen oder Merkmale handelt.

Die innere Mantelfläche 12 bildet einen Innenkonus. In Radialrichtung 3 gegenüberliegend weist der Ringkörper 21 des Synchronringes 1 eine radial äußere Mantelfläche 14 auf. Während die radial innere Mantelfläche 12 des Ringkörpers 21 konisch verläuft, ist die äußere Mantelfläche 14 zylindrisch ausgebildet. An der inneren Mantelfläche 12 ist ein konisch gestalteter Reibring bzw. Reibbelag 5 fixiert, während die äußere Mantelfläche 14 keinen Reibbelag trägt. Er deckt einen Teil der inneren Mantelfläche 12 in Umfangsrichtung 24 des Synchronringes 1 ab.

Zwei in Axialrichtung 6 mit parallelem Abstand zueinander verlaufende Umfangskanten des Ringkörpers 21 des Synchronringes 1, nämlich eine erste Umfangskante 7 und eine zweite Umfangskante 8 an einer axialen Stirnfläche 17 begrenzen entlang einer axialen Breite (b) einen geradlinigen Querschnitt 9 der Mantelfläche 12 und eine gedachte Verlängerung 16 der Mantelfläche 12 (Fig. 6).

Zwischen einem ersten Umfangsrand 10 des Reibbelages 5 und der diesem Umfangsrand 10 axial zugewandten ersten Umfangskante 7 des Ringkörpers 21 ist ein axialer Abstand d1 gebildet, der frei von dem Reibbelag 5 ist. Beispielsweise beträgt in Fig. 6 der Abstand d1 = 1,5 mm und die axiale Breite b = 8,2 mm. Daraus ergibt sich bei dem Synchronring 1 gemäß Fig. 4 bis Fig. 6 ein Längenverhältnis d1 / b ≈ 0,18.

Zwischen dem zweiten Umfangsrand 11 des Reibbelages 5 und der zweiten Umfangskante 8 ist ein reibbelagsfreier weiterer axialer Abstand d2 gebildet. In Kombination mit den vorgenannten Werten beträgt in Fig. 6 der weitere axiale Abstand d2 z.B. d2 = 0,4 mm.

Der Reibbelag 5 ist insbesondere karbonhaltig und vorzugsweise mittels Kleben, insbesondere Heißkleben, an der Mantelfläche 2 bzw. 12 des jeweiligen Ringkörpers 21 des Synchronringes 1 fixiert. Außerdem wird der fixierte Reibbelag 5 verdichtet und ausgehärtet. Diese Verfahrensschritte können nacheinander oder zumindest teilweise gleichzeitig erfolgen.

Diese Behandlung des Reibbelages 5 an dem Synchronring 1 kann auch als Einformen bezeichnet werden. Sie erfolgt vorzugsweise mittels eines segmentierten Spreizstempels 19 (Spreizstempel-Werkzeug, segmentierter Innen-Stempel im Falle der Mantelfläche 2 gemäß Fig. 2; segmentierter AußenStempel im Falle der Mantelfläche 12 gemäß Fig. 5), welcher entlang Axialrichtung 6, vorzugsweise in Arbeitsrichtung 18, an die Mantelfläche 2 bzw. 12 des Synchronringes 1 herangeführt und axial definiert positioniert wird. Die hier lediglich schematisch und vereinzelt dargestellten Stempelsegmente 20 des Spreizstempels 19 sind in Umfangsrichtung 24 des Synchronringes 1 aneinandergereiht angeordnet. Entlang der Axialrichtung 6 sind die Stempelsegmente 20 lediglich ausschnittsweise dargestellt. Die Punktlinie zwischen einzelnen Stempelsegmenten 20 steht symbolisch für weitere, hier nicht dargestellte Stempelsegmente 20.

Die einzelnen Stempelsegmente 20 spreizen sich in Radialrichtung 3 einzeln auf und beaufschlagen den Reibbelag 5 und die Mantelfläche 2 bzw. 12 mit radialem Druck zur Fixierung bzw. Behandlung des Reibbelages 5. Unerwünschte axiale Positionsänderungen des Reibbelags 5 werden vermieden. Vielmehr wird die vordefinierte axiale Positionierung des Reibbelages 5 an der Mantelfläche 2 bzw. 12 aufrechterhalten.

In einer bevorzugten Ausführungsform ist der Reibbelag 5 an der ausgewählten Mantelfläche 2 bzw. 12 bereits lose angelegt, bevor der Spreizstempel 19 zur Fixierung des Reibbelages 5 aktiviert wird.

Der Spreizstempel 19 kann auch nur für einzelne von mehreren vorgesehenen Fertigungsschritten (z.B. Vorfixieren, Kleben, Verdichten, Aushärten) verwendet werden, während andere der vorgesehenen Fertigungsschritte von einem oder mehreren zusätzlichen Spreizstempel-Werkzeugen durchgeführt werden.

Gemäß Fig. 2 und Fig. 5 ist der Spreizstempel 19 konisch ausgebildet, um bei der Herstellung des Synchronringes 1 eine wirksame Anpassung an die ebenfalls konisch verlaufenden Mantelflächen 2 bzw. 12 zu erreichen.

In einer weiteren, hier nicht dargestellten Ausführungsform ist der Spreizstempel 19 zylindrisch ausgebildet, insbesondere zur Fixierung eines Reibbelages an einer zylindrischen Mantelfläche des Ringkörpers 21.

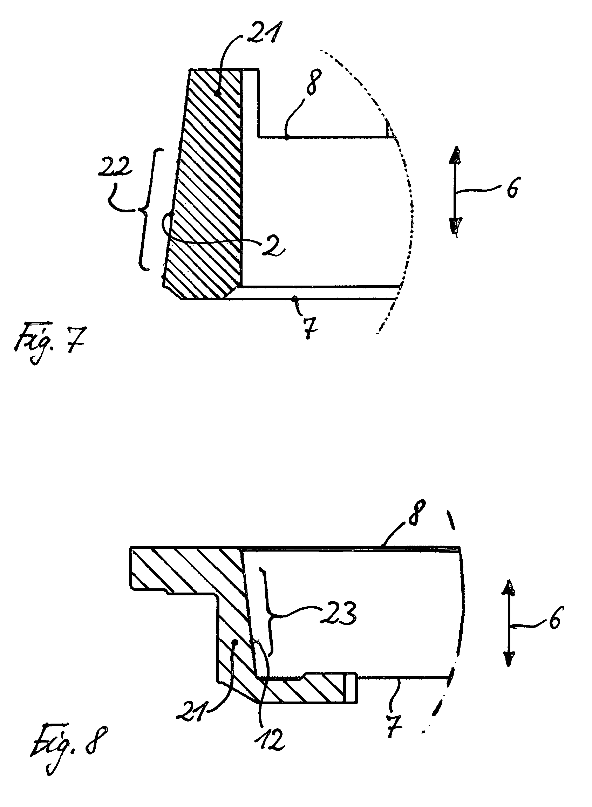

In Fig. 7 und Fig. 8 ist der Ringkörper 21 nach seiner vorzugsweise pulvermetallurgischen Herstellung erkennbar, d.h. der Reibbelag 5 ist an der Mantelfläche 2 bzw. 12 noch nicht fixiert. Diese Mantelflächen 2, 12 oder zumindest deren von dem Reibbelag 5 abzudeckenden Flächenbereiche 22 bzw. 23 sind nach der vorgenannten Herstellung des Ringkörpers 21 nicht nachträglich bearbeitet. Mit anderen Worten wird an den Mantelflächen 2 bzw. 12 nach der Herstellung des Ringkörpers 21 kein Material abtragender Arbeitsschritt durchgeführt, um beispielsweise geometrische Endmaße oder vordefinierte Toleranzen zu erzielen. Vielmehr werden diese Toleranzen und Endmaße erforderlichenfalls mittels einer Verdichtung des Reibbelages 5 erzielt.

## Patentansprüche

1. Verfahren zur Herstellung eines ringartigen Bauteiles (1) mit einem eine Mantelfläche (2, 12) aufweisenden Ringkörper (21) und einem an dieser Mantelfläche (2, 12) fixierten Reibbelag (5), wobei zwei In Axialrichtung (6) mit Abstand zueinander verlaufende Umfangskanten (7, 8) des Ringkörpers (21) eine axiale Breite (b) begrenzen, Innerhalb welcher der Reibbelag (5) fixiert wird, wobei der Ringkörper (21) mittels Sintern hergestellt wird und nach seiner Herstellung mit einer Mantelflächen (2, 12) bereitgestellt wird, deren von dem Relbbelag (5) abzudeckenden Flächenbereiche (22, 23) zumindest teilweise mechanisch unbearbeitet sind,
**dadurch gekennzeichnet, dass**
die Mantelfläche (2, 12) des gesinterten Ringkörpers (21) mit offenporlgen Sinterporen bereitgestellt und der Reibbelag (5) mittels Klebern an der offenporlgen Mantelfläche (2, 12) fixiert wird.

2. Verfahren nach Anspruch 1, **dadurch gekennzeichnet, dass** sämtliche von dem Reibbelag (5) abzudeckenden Flächenbereiche (22, 23) der Mantelfläche (2, 12) mechanisch unbearbeitet sind.

3. Verfahren nach einem der vorhergehenden Ansprüche, **dadurch gekennzeichnet, dass** der Reibbelag (5) an einer radial äußeren Mantelfläche (2) des Ringkörpers (21) fixiert wird,

4. Verfahren nach einem der vorhergehenden Ansprüche, **dadurch gekennzeichnet, dass** der Reibbelag (5) verdichtet wird.

5. Verfahren nach Anspruch 4, **dadurch gekennzeichnet, dass** die Verdichtung In Umfangsrichtung (24) der Mantelfläche (2,12) des Ringkörpers (21) unterschiedlich ist.

6. Verfahren nach einem der vorhergehenden Ansprüche, **dadurch gekennzeichnet, dass** der Reibbelag (5) ein Vlies oder ein Gewebe, insbesondere ein Faser-Gewebe, aufweist.

7. Verfahren nach einem der vorhergehenden Ansprüche, **dadurch gekennzeichnet, dass** zur Fixierung des Reibbelages (5) ein In Umfangsrichtung (24) segmentierter Spreizsternpel (19) verwendet wird, dessen Stempelsegmente (20) radial beweglich sind zur Spreizung des Spreizstempels (19) radial nach innen und/oder außen.

8. Verfahren nach einem der vorhergehenden Ansprüche, **dadurch gekennzeichnet, dass** der Reibbelag (5) an der Mantelfläche (2, 12) derart fixiert wird, dass zwischen einem ersten Umfangsrand (10) des Reibbelages (5) und der diesem Umfangsrand (10) axial zugewandten ersten Umfangskante (7) des Ringkörpers (21) ein reibbelagsfreier axialer Abstand (d1) gebildet wird, für den gilt: axialer Abstand d1 > 0.

9. Verfahren nach Anspruch 8, **dadurch gekennzeichnet, dass** für den axialen Abstand (d1) gilt: axialer Abstand d1 ≥ 0,1 mm, insbesondere ≥ 0,5 mm.

10. Verfahren nach Anspruch 8 oder 9, **dadurch gekennzeichnet, dass** für das Verhältnis des axialen Abstandes (d1) zu der axialen Breite (b) gilt: axialer Abstand d1 / axiale Breite b ≥ 0,10.

11. Verfahren nach einem der vorhergehenden Ansprüche, **dadurch gekennzeichnet, dass** für das Verhältnis des axialen Abstandes (d1) zu der axialen Breite (b) gilt: axialer Abstand d1 / axiale Breite b ≥ 0,14, vorzugsweise axialer Abstand d1 / axiale Breite b ≥ 0,18.

12. Verfahren nach einem der vorhergehenden Ansprüche, **dadurch gekennzeichnet, dass** zwischen dem zweiten Umfangsrand (11) des Reibbelages (5) und der zweiten Umfangskante (8) der Mantelfläche (2, 12) des Ringkörpers (21) ein reibbelagsfreier weiterer axialer Abstand (d2) gebildet ist.

13. Verfahren nach einem der vorhergehenden Ansprüche, **dadurch gekennzeichnet, dass** eine Umfangskante (7, 8) durch eine Kante an einer der beiden axialen Stirnflächen (15, 17) des Ringkörpers (21) gebildet ist.

14. Verfahren nach einem der vorhergehenden Ansprüche, **dadurch gekennzeichnet, dass** die Mantelfläche (2, 12) einen konischen Verlauf aufweist.

15. Verfahren nach einem der vorhergehenden Ansprüche, **dadurch gekennzeichnet, dass** das Bauteil als ein Synchronisierbauteil (1) für Getriebe von Kraftfahrzeugen ausgebildet ist.

## Claims

1. Method for producing a ring-like component (1) having a ring body (21) which has a circumferential face (2, 12) and having a friction lining (5) which is fixed on said circumferential face (2, 12), wherein two circumferential edges (7, 8) of the ring body (21) run at an axial (6) spacing from one another thereby delimiting an axial width (b), within which the friction lining (5) is fixed, wherein the ring body (21) is produced by means of sintering and, after its production, the ring body (21) is provided with a circumferential face (2, 12), the surface regions (22, 23) of which, which are to be covered by the friction lining (5), are not machined at least partially, **characterized in that**
the circumferential face (2, 12) of the sintered ring body (21) is provided with open-porous sinter pores and the friction lining (5) is fixed to the open-porous circumferential face (2, 12) by means of adhesive bonding.

2. Method according to Claim 1, **characterized in that** all the surface regions (22, 23) of the circumferential face (2, 12) which are to be covered by the friction lining (5) are not machined.

3. Method according to one of the preceding claims, **characterized in that** the friction lining (5) is fixed to a radially outer circumferential face (2) of the ring body (21).

4. Method according to one of the preceding claims, **characterized in that** the friction lining (5) is compressed.

5. Method according to Claim 4, **characterized in that** the compression in the circumferential direction (24) of the circumferential face (2, 12) of the ring body (21) is different.

6. Method according to one of the preceding claims, **characterized in that** the friction lining (5) has a non-woven fabric or a woven fabric, in particular a woven fiber fabric.

7. Method according to one of the preceding claims, **characterized in that**, in order to fix the friction lining (5), a spreading ram (19) is used which is segmented in the circumferential direction (24) and the ram segments (20) of which are radially movable in order to spread the spreading ram (19) radially to the inside and/or outside.

8. Method according to one of the preceding claims, **characterized in that** the friction lining (5) is fixed to the circumferential face (2, 12) in such a way that an axial spacing (d1) which is free of friction lining (5) is formed between a first circumferential lip (10) of the friction lining (5) and that first circumferential edge (7) of the ring body (21) which faces said circumferential lip (10) axially, for which axial spacing (d1) the following is true: axial spacing d1 > 0.

9. Method according to Claim 8, **characterized in that** the following is true for the axial spacing (d1): axial spacing d1 ≥ 0.1 mm, in particular ≥ 0.5 mm.

10. Method according to Claim 8 or 9, **characterized in that** the following is true for the ratio of the axial spacing (d1) to the axial width (b): axial spacing d1 / axial width b ≥ 0.10.

11. Method according to one of the preceding claims, **characterized in that** the following is true for the ratio of the axial spacing (d1) to the axial width (b): axial spacing d1 / axial width b ≥ 0.14, preferably axial spacing d1 / axial width b ≥ 0.18.

12. Method according to one of the preceding claims, **characterized in that** a further axial spacing (d2) which is free of friction lining (5) is formed between the second circumferential lip (11) of the friction lining (5) and the second circumferential edge (8) of the circumferential face (2, 12) of the ring body (21).

13. Method according to one of the preceding claims, **characterized in that** a circumferential edge (7, 8) is formed by an edge on one of the two axial end faces (15, 17) of the ring body (21).

14. Method according to one of the preceding claims, **characterized in that** the circumferential face (2, 12) has a conical profile.

15. Method according to one of the preceding claims, **characterized in that** the component is configured as a synchronizing component (1) for transmissions of motor vehicles.

## Revendications

1. Procédé de fabrication d'une pièce annulaire (1) avec un corps annulaire (21) présentant une surface latérale (2, 12) et avec une couche de friction (5) fixée à cette surface latérale (2, 12), dans lequel deux arêtes périphériques (7, 8) du corps annulaire (21) s'étendant à distance l'une de l'autre en direction axiale (6) limitent une largeur axiale (b), à l'intérieur de laquelle on fixe la couche de friction (5), dans lequel on fabrique le corps annulaire (21) par frittage et on lui fournit après sa fabrication avec une surface latérale (2, 12), dont les régions de surface (22, 23) à recouvrir par la couche de friction (5) ne sont au moins en partie pas usinées mécaniquement, **caractérisé en ce que** l'on fournit la surface latérale (2, 12) du corps annulaire fritté (21) avec des pores de frittage ouverts et on fixe la couche de friction (5) par collage à la surface latérale (2, 12) à pores ouverts.

2. Procédé selon la revendication 1, **caractérisé en ce que** toutes les régions de surface (22, 23) de la surface latérale (2, 12) à recouvrir par la couche de friction (5) ne sont pas usinées mécaniquement.

3. Procédé selon l'une quelconque des revendications précédentes, **caractérisé en ce que** l'on fixe la couche de friction (5) sur une surface latérale radialement extérieure (2) du corps annulaire (21).

4. Procédé selon l'une quelconque des revendications précédentes, **caractérisé en ce que** l'on comprime la couche de friction (5).

5. Procédé selon la revendication 4, **caractérisé en ce que** la compression est différente dans la direction périphérique (24) de la surface latérale (2, 12) du corps annulaire (21).

6. Procédé selon l'une quelconque des revendications précédentes, **caractérisé en ce que** la couche de friction (5) présente un non-tissé ou un tissu, en particulier un tissu de fibres.

7. Procédé selon l'une quelconque des revendications précédentes, **caractérisé en ce que** l'on utilise pour la fixation de la couche de friction (5) un poinçon expansible (19) segmenté en direction périphérique (24), dont les segments de poinçon (20) sont mobiles radialement pour l'expansion du poinçon expansible (19) radialement vers l'intérieur et/ou vers l'extérieur.

8. Procédé selon l'une quelconque des revendications précédentes, **caractérisé en ce que** l'on fixe la couche de friction (5) à la surface latérale (2, 12) de telle manière qu'il se forme entre un premier bord périphérique (10) de la couche de friction (5) et la première arête périphérique (7) du corps annulaire (21) tournée axialement vers ce bord périphérique (10) une distance axiale sans couche de friction (d1), pour laquelle on a: distance axiale d1 > 0.

9. Procédé selon la revendication 8, **caractérisé en ce que** l'on a pour la distance axiale (d1): distance axiale dl ≥ 0,1 mm, en particulier ≥ 0,5 mm.

10. Procédé selon la revendication 8 ou 9, **caractérisé en ce que** pour le rapport de la distance axiale (d1) à la largeur axiale (b), on a: distance axiale d1 / largeur axiale b ≥ 0,10.

11. Procédé selon l'une quelconque des revendications précédentes, **caractérisé en ce que** pour le rapport de la distance axiale (d1) à la largeur axiale (b), on a : distance axiale d1 / largeur axiale b ≥ 0,14, de préférence distance axiale d1 / largeur axiale b ≥ 0,18.

12. Procédé selon l'une quelconque des revendications précédentes, **caractérisé en ce qu'**une autre distance axiale sans couche de friction (d2) est formée entre le deuxième bord périphérique (11) de la couche de friction (5) et la deuxième arête périphérique (8) de la surface latérale (2, 12) du corps annulaire (21).

13. Procédé selon l'une quelconque des revendications précédentes, **caractérisé en ce qu'**une arête périphérique (7, 8) est formée par une arête sur une des deux faces frontales axiales (15, 17) du corps annulaire (21).

14. Procédé selon l'une quelconque des revendications précédentes, **caractérisé en ce que** la surface latérale (2, 12) présente une allure conique.

15. Procédé selon l'une quelconque des revendications précédentes, **caractérisé en ce que** la pièce est constituée par une pièce de synchronisation (1) pour des boîtes de vitesses de véhicules à moteur.
